# EUROPÄISCHE PATENTSCHRIFT

(11) **EP 2 160 013 B1**
(45) Veröffentlichungstag und Bekanntmachung des Hinweises auf die Patenterteilung: **04.04.2012**
(21) Anmeldenummer: 08015136.8
(22) Anmeldetag: 27.08.2008
(51) Int. Cl.: H04N 5/00, H04N 5/44

(54) **Docking Station**
Docking station
Station d'accueil

(43) Veröffentlichungstag der Anmeldung: 03.03.2010
(73) Patentinhaber: Novabase Digital TV Technologies GmbH, 85356 München (DE)
(72) Erfinder: Franke, Volker, 99510 Apolda (DE); Pauli, Michael, 04105 Leipzig (DE); Richardt, Guido, 99974 Mühlhausen (DE); Schick, Daniel, 99084 Erfurt (DE)
(74) Vertreter: Maiwald Patentanwalts GmbH

(56) Entgegenhaltungen:
- EP-A- 1 631 072
- WO-A-02/35838
- WO-A-03/094511
- WO-A-03/107537
- WO-A-2007/072211
- US-A1- 2007 028 260

## Beschreibung

### Gebiete der Erfindung

Die vorliegenden Erfindung bezieht sich auf eine Docking Station und insbesondere auf eine Docking Station für eine modulare Vorrichtung zum digitalen Multimediaempfang, insbesondere zum digitalen Fernsehempfang.

### Hintergrund der Erfindung

Digitale Fernsehempfangsgeräte (DFEG) bzw. digitale Multimediaempfangsgeräte sind zum überwiegenden Teil als so genannte Set-Top-Boxen (STB) realisiert, die als separate Beistellgeräte in der Nähe eines Wiedergabegerätes, beispielsweise eines Fernsehgerätes, platziert werden können. In diesen Set-Top-Boxen (STB) sind im Regelfall eine Vielzahl funktioneller Einheiten implementiert. Dabei unterscheidet man im Wesentlichen in ein Frontend-Modul und ein Backend-Modul. In dem Frontend-Modul sind beispielsweise ein Tuner und ein Demodulator implementiert. In einem Backend-Modul sind beispielsweise ein Demultiplexer, ein Descrambler, ein programmierbarer Audio/Videodecoder, ein flüchtiger Arbeitsspreicher (RAM) sowie ein nichtflüchtiger Programm- und Datenspeicher (NVRAM) implementiert. Ferner sind in der Regel eine Stromversorgung, Anzeige- und Bedienelemente sowie verschiedene Anschlüsse vorgesehen. Anzeigeelemente können dabei beispielsweise LEDs, Infrarotfernbedienungsempfänger, Kartenleser, Tasten sowie numerische oder alphanumerische Anzeigen sein. Die vorgesehenen Anschlüsse können beispielsweise ein Stromversorgungsanschluss, ein Hochfrequenzeingang (HF) und gegebenenfalls ein HF-Durchschleifausgang sowie analoge undoder digitale Video-und Audio-Ausgänge sein.

Einige der in den Set-Top-Boxen untergebrachten Funktionalitäten sind zwingend erforderlich für den Empfang digitaler Multimediasignale bzw. Fernsehsignale, während wiederum andere Funktionalitäten und Komponenten nicht zwingend für den Empfang von Signalen notwendig sind, sondern beispielsweise zusätzliche Funktionalitäten darstellen, die den Bedienkomfort erhöhen oder die Funktionalität der Set-Top-Box über das notwendige Maß hinaus erweitern. Ferner gibt es bei Set-Top-Boxen Komponenten, die einer starken kontinuierlichen Weiterentwicklung unterliegen, so dass einige Komponenten von der technischen Weiterentwicklung häufig überholt werden, während andere Komponenten über längere Zeiträume der zugedachten Funktionalität gerecht werden.

Ferner besteht bei einigen Komponenten einer Set-Top-Box die Notwendigkeit, eine gewisse Anpassung an lokale bzw. regionale Gegebenheiten vorzunehmen.

Derzeitige Set-Top-Boxen werden im Regelfall als integre Einheiten angeboten, die weder irgendeine Art der Erweiterung noch irgendeine Art der Modularität zur Verfügung stellen, die genannten Anforderungen gerecht würden.

In US 2007/028260 A1 wird eine Vorrichtung zur Verarbeitung von digitalen Multimediasignalen beschrieben, welche fest beispielsweise in einen Fernseher eingebaut und durch Steckkarten in ihrem Funktionsumfang erweitert werden kann. WO 03/107537 A beschreibt eine erweiterbare Set-Top-Box. Diese kann ebenfalls durch Steckkarten in ihrem Funktionsumfang erweitert werden.

EP 1 631 072 A zeigt eine Steckkarte, welche einem digitalen Host-Gerät hinzugefügt werden kann um den Funktionsumfang zu erweitern. Die Steckkarte verfügt über Komponenten zur Verarbeitung von digitalen Multimediasignalen.

### Zusammenfassung der Erfindung

Vor dem Hintergrund der Probleme im Stand der Technik kann es als eine Aufgabe der vorliegenden Erfindung betrachtet werden, eine Konfiguration für eine

Vorrichtung zum Decodieren und Empfang digitaler Multimediasignale bzw. Fernsehsignale bereit zu stellen, die die Probleme aus dem Stand der Technik überwindet.

Die Aufgabe der vorliegenden Erfindung wird gelöst durch den Gegenstand der unabhängigen Ansprüche während weitere Ausführungsformen durch die abhängigen Ansprüche verkörpert werden.

Gemäß der Erfindung wird eine Docking Station bereitgestellt für ein lösbares Ankoppeln einer Vorrichtung zum Decodieren von digitalen Multimediasignalen, wobei die Docking Station aufweist: Eine Signaleingangsschnittstelle für digitale Multimediasignale, eine erste Frontend-Baugruppe, die ausgelegt ist zum Empfangen von digitalen Multimediasignalen, eine Backend-Schnittstelle mit einem ersten Ankoppelbereich, der ausgelegt ist zum lösbaren Ankoppeln einer externen Backend-Baugruppe, eine HDMI-Eingangsschnittstelle, die ausgelegt ist zum lösbaren Ankoppeln einer HDMI-Ausgangsschnittstelle einer externen Vorrichtung zum Decodieren von digitalen Multimediasignalen, und eine HDMI-Ausgangsschnittstelle, die ausgelegt ist zum lösbaren Ankoppeln eines externen Multimediagerätes.

Mit einer derartigen Dockingstation kann beispielsweise eine externe Vorrichtung zum Decodieren von digitalen Multimediasignalen, beispielsweise in der Form eines HD-Sticks, lösbar an einer Docking Station angekoppelt werden. Die Docking Station kann dabei als eine Art Basisstation dienen, in der Frontend-Komponenten vorgesehen sind, die ein externes HF-Signal über einen Tuner IC aufbereiten sowie durch einen Demodulator IC demodulieren, um für eine extern vorgesehene Backend-Baugruppe Signale bereitzustellen. Die externen Backend-Baugruppen können über die Backend-Schnittstelle an die Docking Station angekoppelt werden. Über die High Definition Multimedia Interface (HDMI) Eingangsschnittstelle kann das durch die Backend-Baugruppe decodierte digitale Multimediasignal an die Docking Station zurückgegeben werden, um dieses dann über eine HDMI-Ausgangsschnittstelle an ein externes Multimediagerät, beispielsweise ein Fernsehgerät auszugeben. Die Docking Station kann dabei als zentrales Modul für eine Vorrichtung zum Empfangen und Decodieren von Multimediasignalen bzw. Fernsehsignalen dienen, wobei diese zentrale modulare Einheit die Möglichkeit bietet, weitere Komponenten aufzunehmen oder anzukoppeln, um so beispielsweise einer technischen Weiterentwicklung oder einer Anpassung an lokale oder regionale Märkte zu folgen. Ähnlich einer Docking Station für einen Computer können somit die Verdrahtungen und Anschlüsse an die einzelnen Komponenten beibehalten werden, während beispielsweise das externe Backend-Modul von der Docking Station abgekoppelt werden kann, um dieses beispielsweise auszutauschen oder um dieses beispielsweise direkt in oder an einem anderen Multimediagerät zu verwenden.

Gemäß der Erfindung wird eine Docking Station bereitgestellt, mit einer Frontend-Schnittstelle mit einem ankoppelbaren Bereich, der ausgelegt ist zum lösbaren Ankoppeln einer zweiten, externen Frontend-Baugruppe, wobei die Backend-Schnittstelle einen zweiten Ankoppelbereich aufweist, der ausgelegt ist zum lösbaren durchschleifenden Ankoppeln der Frontend-Schnittstelle an eine externe Backend-Baugruppe.

Auf diese Weise ist es möglich, neben einer bereits in der Docking Station vorhandenen Frontend-Baugruppe eine weitere externe Frontend-Baugruppe anzukoppeln, die beispielsweise erlaubt auf Empfangssignale eines anderen Standards ausgelegt zu sein, so dass die vorgeschlagene Docking Station ermöglicht, durch Ankoppeln einer externen weiteren Frontend-Baugruppe Signaldaten unterschiedlicher Herkünfte und Standards bereitzustellen. Beispielsweise wird ermöglicht, innerhalb der Docking Station eine Frontend-Baugruppe für einen Satellitenempfang bereitzustellen, während über eine externe Frontend-Baugruppe Daten über einen Kabelempfang oder einen Antennenempfang bereitgestellt werden können. Weiterhin ist es möglich, lediglich durch Wechsel einer externen Frontend-Baugruppe die vorhandene Docking Station auch in Regionen oder Ländern zu verwenden, in denen der vorherrschende Standard nicht kompatibel ist mit der in der Docking Station bereits vorhandenen Frontend-Baugruppe.

Gemäß einer Ausführungsform der Erfindung wird eine Docking Station bereitgestellt mit einer Spannungsversorgungsvorrichtung für die Docking Station, wobei die Backend-Schnittstelle einen Ankoppelbereich aufweist, der ausgelegt ist zum lösbaren Ankoppeln der Spannungsversorgungsvorrichtung an eine ankoppelbare externe Backend-Baugruppe.

Auf diese Weise kann die Docking Station nicht nur für die eigene Energieversorgung ausgelegt sein, sondern auch für die Energieversorgung von ankoppelbaren externen Modulen, wie beispielsweise einem ankoppelbaren Gerät für eine Vorrichtung zum Decodieren von digitalen Multimediasignalen, wie etwa einer Backend-Baugruppe, die z.B. in einem HD-Stick vorgesehen sein kann. Die Docking Station kann bezüglich der Spannungsversorgungsvorrichtung auch derart ausgelegt sein, dass weitere externe ankoppelbare Komponenten mit Spannung bzw. Energie versorgt werden können. Außerdem kann die Spannungsversorgungsvorrichtung der Docking Station auch an einen Spannungsversorgungsbus angekoppelt sein, so dass diese mit anderen Spannungsversorgungsvorrichtungen von beispielsweise anzukoppelnden Komponenten korrespondiert und somit eine Redundanz der Spannungsversorgung hergestellt werden kann.

Gemäß einer Ausführungsform der Erfindung wird eine Dockingstation bereitgestellt, die eine Frontend-Schnittstelle mit einem Ankoppelbereich aufweist, der ausgelegt ist zum lösbaren Ankoppeln einer externen Spannungsversorgung an die Docking Station, wobei die Backend-Schnittstelle einen Ankoppelbereich aufweist, der ausgelegt ist zum lösbaren durchschleifenden Ankoppeln der externen Spannungsversorungsvorrichtung an eine ankoppelbare externe Backend-Baugruppe.

Auf diese Weise kann die Spannungsversorgung für eine externe Backend-Baugruppe nicht nur durch die Docking Station bereitgestellt werden, sondern auch durch eine externe ankoppelbare Komponente, die selbst eine Spannungsversorgungsvorrichtung aufweist. Durch ein derartiges in der Docking Station vorgesehenes Bussystem kann somit über die Docking Station eine Verteilung in der Spannungsversorgung erfolgen, selbst wenn die eigentliche Spannungsversorgung in der Docking Station dafür nicht bereitsteht oder eventuell nicht genüg Kapazitäten aufweist.

Gemäß einer Ausführungsform der Erfindung wird eine Docking Station bereitgestellt mit einer Bedienvorrichtung, wobei die Backend-Schnittstelle einen Ankoppelbereich aufweist, der ausgelegt ist zum lösbaren Ankoppeln der Bedienvorrichtung an eine ankoppelbare externe Vorrichtung zum Decodieren digitaler Multimediasignale.

Auf diese Weise kann ein unter Umständen größeres Bedienelement wie beispielsweise eine Tastatur oder dergleichen in der Docking Station vorgesehen sein, mittels der nicht nur die Komponenten der Docking Station, sondern auch die Komponenten einer angekoppelten Komponente, wie beispielsweise eines Backend Moduls bedient werden können.

Gemäß einer Ausführungsform der Erfindung wird eine Docking Station bereitgestellt mit einer Bedienschnittstelle, die ausgelegt ist zum lösbaren Ankoppeln einer externen Bedienvorrichtung an die Docking Station, wobei die Backend-Schnittstelle einen Ankoppelbereich aufweist, der ausgelegt ist zum lösbaren durchschleifenden Ankoppeln einer externen Bedienvorrichtung an eine ankoppelbare externe Vorrichtung zum Decodieren digitaler Multimediasignale.

Auf diese Weise kann nicht nur eine zu der Docking Station dazugehörige Bedienvorrichtung vorgesehen sein, sondern auch eine externe weitere Bedienvorrichtung an die Docking Station angekoppelt werden, die wiederum nicht nur als Bedienvorrichtung für die Docking Station, sondern auch für weitere angekoppelte Komponenten dienen kann. Diese externe Bedienvorrichtung kann gleiche oder ähnliche Bedienfunktionen aufweisen wie die bereits in der Docking Station intern vorgesehenen Bedienvorrichtung, kann jedoch auch weitere ergänzende Funktionen aufweisen. Eine derartige Bedienvorrichtung kann beispielsweise eine drahtlose Funkfernbedienung oder dergleichen sein.

Gemäß einer Ausführungsform der Erfindung wird eine Docking Station bereitgestellt, bei der die Bedienschnittstelle eine Infrarotschnittstelle ist.

Auf diese Weise lassen sich kabellos weitere Bedienelemente ankoppeln, die beispielsweise über bestimmte Übertragungsprotokolle mit der Docking Station kommunizieren können, und aufgrund bestimmter Standards auch aus Multifunktionsfernbedienungen bestehen können, die im Handel in zahlreichen Varianten erhältlich sind.

Gemäß einer Ausführungsform der Erfindung wird eine Docking Station bereitgestellt, bei der die Frontend-Baugruppe eine Empfangsvorrichtung zum Empfangen digitaler Multimediasignale und eine Demodulationsvorrichtung zum Demodulieren digitaler Multimediasignale aufweist.

Auf diese Weise kann innerhalb der Docking Station eine Empfangs- bzw. Tunervorrichtung vorgesehen sein ebenso wie eine Demodulationsvorrichtung, die eine weitere externe Ankopplung einer externen Frontend-Baugruppe entbehrlich machen können.

Gemäß einer Ausführungsform der Erfindung wird eine Docking Station bereitgestellt, bei der digitale Multimediasignale digitale Fernsehsignale sind.

Auf diese Weise kann die Docking Station für einen High Definition (HD) Femsehempfang ausgelegt sein.

Gemäß einer Ausführungsform der Erfindung wird eine Vorrichtung zum Decodieren digitaler Multimediasignale bereitgestellt mit einer Backend-Baugruppe, die ausgelegt ist für die Datenverarbeitung digitaler Multimediasignale, einer Frontend-Schnittstelle mit einem ersten Ankoppelbereich, der ausgelegt ist zum lösbaren Ankoppeln einer ersten externen Frontend-Baugruppe, und einer HDMI-Ausgangsschnittstelle, die ausgelegt ist zum lösbaren Ankoppeln eines Multimediagerätes.

Auf diese Weise kann eine Vorrichtung zum Decodieren digitaler Multimediasignale bereitgestellt werden, die aufgrund ihrer Ankoppelbarkeit an eine externe Frontend-Baugruppe kompakt ausgestaltet werden kann, wobei die Frontend-Baugruppe wiederum eine regional- bzw. marktabhängige Spannungsversorgungseinheit bzw. Tuner- und Demodulationseinheit aufweisen kann. Die Vorrichtung zum Decodieren digitaler Multimediasignale kann selbst wiederum an ein Multimediagerät angekoppelt werden, beispielsweise ein HDMI-fähiges Fernsehgerät mit Bildröhre oder ein HDMI-fähiges Plasma- oder LCD Display. Jedoch kann die Ankopplung eines Multimediagerätes ebenso über eine beispielsweise Docking Station erfolgen, an die wiederum die Vorrichtung zum Decodieren digitaler Multimediasignale über eine HDMI-Ausgangsschnittstelle angekoppelt ist. Mit anderen Worten kann die Ankoppelung eines externen Multimediagerätes entweder direkt an die Vorrichtung zum Decodieren digitaler Multimediasignale erfolgen, oder auch über die Docking Station, wobei dann die Signalübertragung über die Docking Station erfolgt. Durch einen ersten Ankoppelbereich einer Frontend-Schnittstelle kann eine erste Frontend-Einheit an die Backend-Baugruppe angekoppelt werden.

Gemäß der Ausführungsform der Erfindung weist die Vorrichtung zum Decodieren digitaler Multimediasignale an der Frontend-Schnittstelle einen zweiten Ankoppelbereich auf, der ausgelegt ist zum lösbaren Ankoppeln einer zweiten externen Frontend-Baugruppe.

Auf diese Weise kann an die Backend-Baugruppe nicht nur eine, sondern auch zwei oder mehrere Frontend-Baugruppen angekoppelt werden, von denen beispielsweise eine Frontend-Baugruppe in einer Docking Station vorgesehen ist, an die die Vorrichtung zum Decodieren digitaler Multimediasignale angekoppelt wird. Eine zweite externe Frontend-Baugruppe kann an die Docking Station angekoppelt werden, während die Docking Station entsprechende durchschleifende Leitungen aufweist, um über den entsprechenden zweiten Ankoppelbereich der Frontend-Schnittstelle der Backend-Baugruppe auch die Signale der zweiten externen Frontend-Baugruppe bereitzustellen. Mit anderen Worten ist die Vorrichtung zum Decodieren digitaler Multimediasignale zum Anschluss von mehreren Frontend-Baugruppe ausgelegt, wobei gemäß einer Ausführungsform die unterschiedlichen Ankoppelbereiche in einer Frontend-Schnittstelle vorgesehen sind, die ein einfaches Ankoppeln und Abkoppeln an eine Docking Station erlaubt, ohne auf den Komfort von mehreren Frontend-Baugruppen verzichten zu müssen.

Gemäß einer Ausführungsform der Erfindung wird eine Vorrichtung zum Decodieren digitaler Multimediasignale bereitgestellt, bei der die Frontend-Schnittstelle einen Ankoppelbereich aufweist zur Ankoppelung einer externen Spannungsversorgung an die Vorrichtung zum Decodieren digitaler Multimediasignale.

Auf diese Weise kann an der Vorrichtung zum Decodieren digitaler Multimediasignale ein Eingang für eine Spannungsversorgung bereitgestellt werden, um die Vorrichtung von außerhalb mit notwendiger Energie zu versorgen, ohne dass in der Vorrichtung selbst eine Spannungsversorgungsvorrichtung wie beispielsweise ein Netzteil vorgesehen sein muss.

Gemäß einer Ausführungsform der Erfindung wird eine Vorrichtung zum Decodieren digitaler Multimediasignale bereitgestellt mit einer Bedienschnittstelle, die ausgelegt ist, um einen Datenaustausch zwischen einer externen Bedienvorrichtung und der Vorrichtung zum Decodieren digitaler Multimediasignale zu ermöglichen.

Auf diese Weise kann eine explizite Bedienvorrichtung an der Vorrichtung zum Decodieren digitaler Multimediasignale entfallen, ohne jedoch auf die Bedienbarkeit der Vorrichtung zum Decodieren digitaler Multimediasignale verzichten zu müssen, da die Bedienung über eine entsprechende Schnittstelle erfolgen kann, und entsprechende Bedienelemente beispielsweise an einer anzukoppelnden Docking Station vorgesehen sind.

Gemäß einer Ausführungsform der Erfindung wird eine Kombination der erfindungsgemäßen Vorrichtung zum Decodieren digitaler Multimediasignale der erfindungsgemäßen Docking Station bereitgestellt, wobei die Vorrichtung zum Decodieren digitaler Multimediasignale und die Docking Station jeweils zueinander passende Steckverbindungen aufweisen und direkt miteinander gekoppelt sind, wobei die Kombination als Set-Top-Box ausgeführt ist.

Auf diese Weise kann durch die Kombination der modularen Baugruppen, nämlich der Baugruppe der Vorrichtung zum Decodieren digitaler Multimediasignale und der Baugruppe einer Docking Station die vollständige Funktionalität einer Set-Top-Box bereitgestellt werden, ohne jedoch auf die Möglichkeiten einer Erweiterung oder Ergänzung weiterer Funktionen verzichten zu müssen. Durch die zueinander passenden Steckverbindungen kann eine direkte Ankoppelung der Vorrichtung zum Decodieren digitaler Multimediasignale und der Docking Station gewährleistet werden, wodurch die integrale Einheit für den Benutzer zur Verfügung steht, ohne unbequeme zusätzliche Kabelverbindungen aufzuweisen. Die an einer Docking Station vorgesehenen Steckverbindungen einer Backend-Schnittstelle können mit den an der Docking Station vorgesehenen Steckverbindungen einer Frontend-Schnittstelle für die Ankoppelung einer externen Frontend-Baugruppe derart zueinander korrespondieren, dass die Docking Station quasi als Zwischenkoppelungseinheit zwischen einer externen Frontend-Baugruppe und einer ankoppelbaren externen Backend-Baugruppe verwendet werden kann. Umgekehrt ermöglicht dies, dass bei einem Herausnehmen der Docking Station die externe Frontend-Baugruppe unmittelbar an die externe Backend-Baugruppe angekoppelt werden kann, um damit eine kompakte modulare Richtung zum Empfangen und Decodieren von Multimediasignalen bereitgestellt werden kann, die auf rudimentäre Funktionen beschränkt sein kann, ohne die zusätzlichen Funktionalitäten der Docking Station mit einzubinden. Auf diese Weise kann eine verhältnismäßig kompakte Vorrichtung bereitgestellt werden, insbesondere für Fälle, in denen die weiteren Funktionalitäten verzichtbar sind, beispielsweise wenn die Vorrichtung etwa auf Reisen mitgeführt werden soll.

Gemäß einer Ausführungsform der Erfindung wird eine Vorrichtung zum Empfangen von digitalen Multimediasignalen bereitgestellt mit einer Signaleingangsschnittstellte für digitale Multimediasignale, einer Frontend-Baugruppe, die ausgelegt zum Empfangen von digitalen Multimediasignalen und einer Backend-Schnittstelle, die ausgelegt ist zum Ankoppeln an eine externe Docking Station. Auf diese Weise kann eine separate externe Frontend-Baugruppe bzw. Frontend-Komponente bereitgestellt werden. Die Backend-Schnittstelle der Vorrichtung zum Empfangen digitaler Multimediasignale kann dabei so ausgestaltet sein, dass sie zu der Frontend-Schnittstelle der Vorrichtung zum Decodieren digitaler Multimediasignale derart korrespondiert, dass eine Docking Station an dieser Stelle entbehrlich wird, ohne die rudimentären bzw. wesentlichen Funktionen einer Vorrichtung zum Empfangen und Decodieren von Multimediasignalen zu verlieren.

Gemäß einer Ausführungsform der Erfindung wird eine Kombination einer erfindungsgemäßen Vorrichtung zum Empfangen digitaler Multimediasignalen und einer Vorrichtung zum Decodieren digitaler Multimediasignale bereitgestellt, wobei die Vorrichtung zum Decodieren digitaler Multimediasignale und die Vorrichtung zum Empfangen von digitalen Multimediasignalen jeweils zueinander passende Steckverbindungen aufweisen und direkt miteinander gekoppelt sind.

Es sei angemerkt, dass einzelne oben beschriebene Merkmale selbstverständlich auch untereinander kombiniert werden können, wodurch sich zum Teil auch vorteilhafte Wirkungen einstellen können, die über die Summe der Einzelwirkungen hinausgehen. Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Figur 1 zeigt einen modularen Aufbau und ein Zusammenwirken einer erfindungsgemäßen Docking Station, sowie einer Vorrichtung zum Decodieren digitaler Multimediasignale und einer Vorrichtung zum Empfangen von digitalen Multimediasignalen gemäß beispielhaften Ausführungsformen der Erfindung.
Figur 2 zeigt eine schematische Ansicht eines Zusammenwirkens unterschiedlicher Komponenten bezüglich der Docking Station und der Vorrichtung zum Decodieren digitaler Multimediasignale gemäß einer beispielhaften Ausführungsform der Erfindung.
Figur 3 zeigt eine beispielhafte Struktur einer Backend-Vorrichtung bzw. eines Backend-Prozesses zur IC gemäß einer beispielhaften Ausführungsform der Erfindung.

### Detaillierte Beschreibung beispielhafter Ausführungsformen

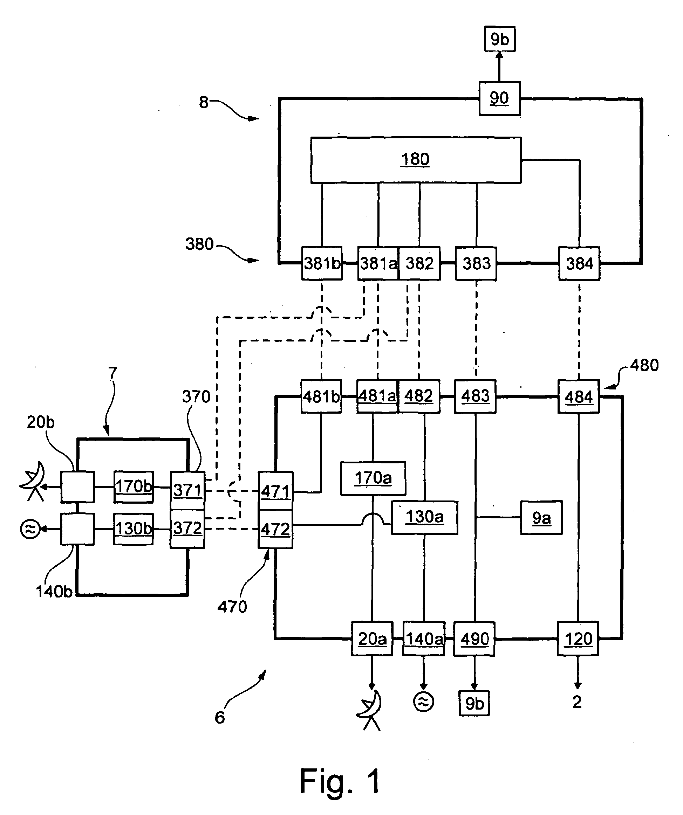

Figur 1 zeigt einen modularen Aufbau einer Docking Station 6, einer Frontend-Einheit 7 sowie einer Backend-Einheit 8. Obwohl die hier gezeigten Komponenten in einer funktionalen Verbindung mit- und zueinander dargestellt sind, betrifft die vorliegende Erfindung auch die einzelnen Komponenten einer Docking Station 6, einer Frontend-Einheit 7 sowie einer Backend-Einheit 8 separat.

Die Docking Station 6 weist eine Backend-Schnittstelle 480 auf, die in der hier gezeigten Ausführungsform einen Anschlussbereich 481 a zum Ankoppeln einer internen ersten Frontend-Baugruppe 170a der Docking Station an eine externe Backend-Einheit 8 ermöglicht. Ferner ist ein zweiter Anschlussbereich 481b vorgesehen, über den über eine durchgeschliffene Leitung bzw. durchgeschliffene Leitungen eine externe ankoppelbare zweite Frontend-Einheit 7 einer enthaltenen Frontend-Baugruppe 170b als zweite Frontend-Baugruppe an die externe Backend-Baugruppe angekoppelt werden kann. Unter dem Begriff Leitung sind auch eine Vielzahl von Leitungsadern bzw. Leitungselementen zu verstehen, wobei sowohl eine uni- als auch eine bidirektionale Übertragung von Signalen erfolgen kann. Selbstverständlich kann auch eine Signalverstärkung erfolgen, um die Signalqualität aufrecht zu erhalten. Auf diese Weise kann an der Backend-Schnittstelle 480 ein Ankoppelbereich 481a für eine interne Frontend-Baugruppe in der Docking Station und ein zweiter Ankoppelbereich 481 b für eine extern ankoppelbare zweite Frontend-Baugruppe 170b bereitgestellt werden. Darüber hinaus weist die in Figur 1 gezeigte Ausführungsform bezüglich der Backend-Baugruppe einen Ankoppelbereich 482 auf, der zur Bereitstellung einer internen Spannungsversorgung 130a in der Docking Station an die Backend-Einheit 8 dient. Über ein Spannungs-bzw. Energieversorgungsbussystem können auch weitere externe Spannungsversorgungsvorrichtungen 130b, beispielsweise in einer Frontend-Einheit 7 an das Energieversorgungsbussystem angekoppelt werden, beispielsweise über einen Ankoppelbereich 472 einer Frontend-Schnittstelle 470 der Docking Station 6. Über dieses Bussystem kann die interne Spannungsversorgung 130a in der Docking Station über einen Stromversorgungsanschluss 140a an ein Energieversorgungsnetz angekoppelt werden. Darüber hinaus kann die Backend-Schnittstelle 480 mit einem Ankoppelbereich 483 versehen sein zum Ankoppeln einer internen Bedienvorrichtung 9a in der Docking Station oder einer an die Docking Station ankoppelbaren externen Bedienvorrichtung 9 b, die über eine Schnittstelle 490 an die Docking Station angekoppelt werden kann. Weiter weist die Backend-Schnittstelle in der in Figur 1 gezeigten Ausführungsform einen Ankoppelbereich für eine HDMI-Schnittstelle auf, mittels der ein von der Backend-Einheit 8 abgegebenes HDMI-Signal empfangen werden kann, um dieses HDMI-Signal über eine interne HDMI-Ausgangsschnittstelle 120 in der Docking Station an ein externes Multimediagerät 2 zu leiten. Auf diese Weise kann die Docking Station mittels einer ein- oder mehrteiligen Backend-Schnittstelle 480 eine vollständige versorgungsmäßige Ankoppelung einer Backend-Einheit bereitstellen, ohne dass weitere Leitungen oder Verbindungen zu der Backend-Einheit 8 hergestellt werden müssten. Die Backend-Einheit 8 kann etwa eine Vorrichtung zum Decodieren digitaler Multimediasignale sein.

Wenn die einzelnen Vorrichtungen, die Docking Station 7, die Vorrichtung zum Empfangen digitaler Multimediasignale 7 und die Vorrichtung zum Decodieren digitaler Multimediasignale 8 auch zusammenhängend in der Figur 1 dargestellt sind, so richtet sich der Anmeldegegenstand auch auf jede dieser Vorrichtungen separat, wodurch eine Modularität eines Systems zum Empfangen und Decodieren digitaler Multimediasignale bereitgestellt wird. Die Vorrichtung zum Decodieren digitaler Multimediasignale 8 weist eine Backend-Baugruppe 180 auf, die in der Figur 1 gezeigten Vorrichtung mit den verschiedenen Ankoppelbereichen einer Frontend-Schnittstelle 380 verbunden sind. Die Frontend-Schittstelle 380 weist dabei einen Ankoppelbereich 381a auf, der mit dem zugehörigen Ankoppelbereich 481a der Backend-Schnittstellte 480 korrespondiert, um über diese Schnittstellenkombination Signale von einer internen Frontend-Baugruppe 170a in einer Docking Station an die Backend-Baugruppe 180 der Vorrichtung zum Decodieren digitaler Multimediasignale bzw. Backend-Einheit zu führen. Analog weist die Frontend-Schnittstelle 380 der Vorrichtung zum Decodieren digitaler Multimediasignale 8 einen zweiten Ankoppelbereich 381 b auf zum Ankoppeln einer externen Frontend-Baugruppe 170b. Über einen entsprechenden Ankoppelbereich 371 einer Backend-Schnittstelle einer externen Empfangsvorrichtung 7, einen Ankoppelbereich 471 der Frontend-Schnittstelle 470 der Docking Station 6 und einen entsprechenden Ankoppelbereich 481b der Backend-Schnittstelle 480 der Docking Station 6, kann die externe Frontend-Baugruppe 170b an die Backendbaugruppe 180 angekoppelt werden. Auf diese Weise können der Backend-Baugruppe 180 Signale unterschiedlicher Frontend-Baugruppen 170a, 170b über die entsprechenden Ankoppelbereiche 381a und 381b zugeführt werden. Darüber hinaus weist die Frontend-Schnittstelle 380 einen Ankoppelbereich 382 auf zum Ankoppeln einer externen Stromversorgung an die Backend-Baugruppe 180. Die externe Stromversorgung kann dabei entweder in einer Docking Station 6 als Spannungsversorgung 130a angeordnet sein, jedoch ebenso über einen Bus in einer weiteren externen Frontend-Einheit bzw. einer externen Vorrichtung zum Empfangen digitaler Multimediasignale 7 als Spannungsversorgungseinheit 130b angeordnet sein. Im letzteren Fall erfolgt die Ankoppelung über einen Bus und entsprechende Koppelbereiche 372 der Backend-Schnittstelle 370, den Bereich 472 der Frontend-Schnittstelle 470 der Docking Station 6 und gegebenenfalls weiterer, hier nicht gezeigter Anschlüsse an das Spannungsversorgungsbussystem.

Darüber hinaus weist die in Figur 1 gezeigte Ausführungsform der Vorrichtung zum Decodieren digitaler Multimediasignale 8 an der Frontend-Schnittstelle 380 einen Ankoppelbereich 383 auf, über den Bedienfunktionalitäten angekoppelt werden können. So können über einen entsprechenden korrespondierenden Ankoppelbereich 483 der Backend-Schnittstelle 480 der Docking Station 6 Bedienelemente 9a bzw. 9b an die Backend-Baugruppe 180 der Vorrichtung zum Decodieren digitaler Multimediasignale 8 angekoppelt werden, um in der Vorrichtung zum Decodieren digitaler Multimediasignale 8 keine separaten Bedienelemente vorsehen zu müssen. Darüber hinaus kann an der Vorrichtung zum Decodieren digitaler Multimediasignale 8 jedoch auch eine eigene Bedienschnittstelle 90 vorgesehen sein, über die beispielsweise über eine Funk- oder Infrarotverbindung eine externe Bedienvorrichtung 9b angeschlossen werden kann. Die Frontend-Schnittstelle 380 der Vorrichtung zum Decodieren digitaler Multimediasignale 8 bzw. Backend-Baueinheit 8 weist ferner einen Ankoppelbereich 384 auf, über den HDMI-Signale der Backend-Baugruppe 180 an die Docking Station 6 gegeben werden können, um diese dann über die Docking Station 6 an ein Multimediawidergabegerät 2 weiterzugeben. Die Schnittstellenbereiche 381a, 381b, 382, 383 und 384 der Frontend-Schnittstelle 380 können dabei so ausgestaltet sein, dass auch einzelne Bereiche separat an- und abgekoppelt werden können. Jedoch kann auch eine einzelne Steckverbindung für die gesamte Frontend-Schnittstelle 380 der Backend-Einheit 8 vorgesehen sein, sodass mittels einer einzigen Steckverbindung die Backend-Einheit 8 bzw. die Vorrichtung zum Decodieren digitaler Multimediasignale 8 an die Docking Station 6 angekoppelt werden kann.

Die in Figur 1 gezeigte Ausführungsform der Vorrichtung zum Empfangen digitaler Multimediasignale 7 bzw. Frontend-Einheit 7 weist neben der bereits beschriebenen Backend-Schnittstelle 370 mit einem Ankoppelbereich 371 für die Ankoppelung einer Frontend-Baugruppe 170b an die Docking Station einen weiteren Ankoppelbereich 372 auf, mit dem eine Stromversorgung von der Frontend-Einheit zu der Docking Station oder umgekehrt hergestellt werden kann. Die Spannungsversorgungseinheit 130b kann dabei über eine entsprechende Anschlussstelle 140b an eine externe Spannungsversorgung angeschlossen sein. Weiterhin kann eine Hochfrequenz (HF) Anschlussvorrichtung 20b vorgesehen sein, über die die Frontend-Baugruppe 170b mit einer HF-Signalquelle verbunden werden kann. Eine derartige HF-Signalquelle kann beispielsweise ein Satellitensignal, ein Kabelsignal oder ein Signal einer terrestrischen Antenne sein, ist jedoch nicht auf diese Signalquellen beschränkt.

Über die Backendschnittstelle 370 kann mit den entsprechenden Ankoppelbereichen 371, 372 eine Ankoppelung an die Frontend-Schittstelle 470 der Docking Station mit den Ankoppelbereichen 471, 472 erfolgen. Jedoch kann die Steckverbindung der Backend-Schnittstelle 370 so ausgestaltet sein, dass sie auch mit den entsprechenden Ankopppelbereichen 381 a, 382 der Frontend-Schnittstelle 380 der Backend-Einheit 8 korrespondiert, sodass die Frontend-Einheit 7 auch unmittelbar mit der Backend-Einheit 8 kombiniert werden kann, wenn beispielsweise die Funktionalitäten der Docking Station 6 nicht benötigt werden.

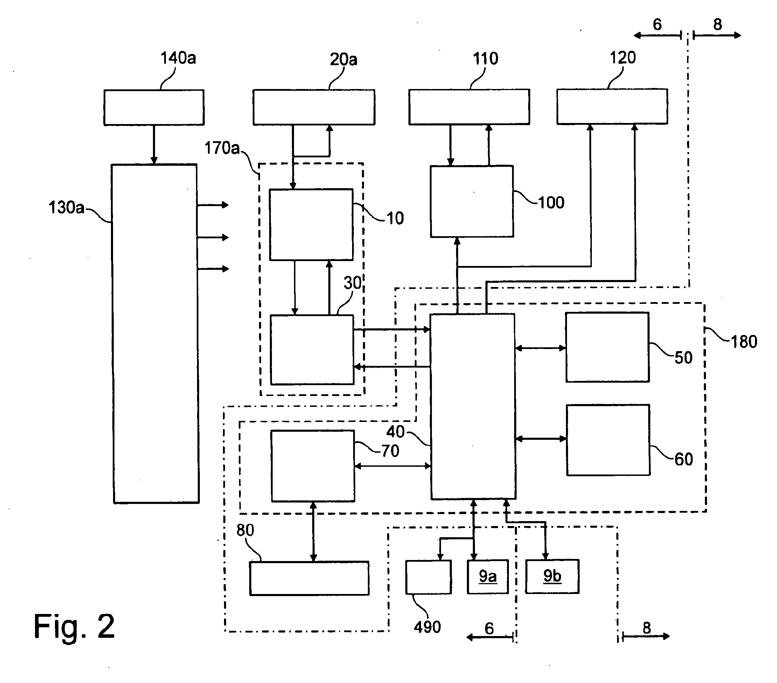

Figur 2 zeigt eine schematische Ansicht der funktionalen Zusammenhänge zwischen unterschiedlichen Komponenten der Docking Station 6 bzw. einer Vorrichtung zum Decodieren digitaler Multimediasignale 8 sowie mit äußeren Komponenten davon. Die gestrichpunktete Linie zeigt dabei die Trennung zwischen der Docking Station 6 und der Vorrichtung zum Decodieren digitaler Multimediasignale 8 auf. Die Docking Station 6 weist beispielsweise ein Frontend Modul 170a auf mit einem Tuner IC 10 sowie einem Demodulator IC 30, die miteinander im Datenaustausch gekoppelt sind. In dieser Ausführungsform erfolgt über den Demodulator IC 30 eine Ankoppelung über die entsprechenden hier nicht näher bezeichneten Schnittstellen mit dem Backend Modul 180 der Vorrichtung zum Decodieren digitaler Multimediasignale 8. Ferner ist die Docking Station mit einer Signaleingangsschnittstelle 20a verbunden, über die beispielsweise in Form von HF-Signalen Eingangssignale in das Frontend Modul 170a weitergegeben werden können. Ferner ist eine Spannungsversorgungseinheit 130a mit einem Stromversorgungsanschluss 140a vorgesehen, der zur Spannungsversorgung der Komponenten der Docking Station 6 dient. Die weiteren funktionellen Verknüpfungen sind in der in Figur 2 gezeigten schematischen Darstellung nicht im Detail ausgeführt. Die Vorrichtung zum Decodieren digitaler Multimediasignale 8 weist neben dem Backend Modul 180 beispielsweise eine Bedienschnittstelle 90 für Bedien- und Anzeigeelemente auf, sowie einen Anschluss für z.B. eine SmartCard 80 in Form eines SmartCard Slotes. Ferner ist ein Ausgang zum Anschluss eines HDMI-fähigen Multimediagerätes 120 vorgesehen. Weiterhin können beispielsweise eine Remodulatorbaugruppe 100 sowie Remodulator-HF-Anschlüsse 110 vorgesehen sein. Das Backend Modul 180 kann dabei beispielsweise einen Backend-Prozessor IC 40, einen RAM-Speicher 50, einen Flash-Speicher 60 und einen SmartCard IC 70 aufweisen. Der SmartCard IC kann dabei beispielsweise mit der Schnittstelle für die SmartCard 80 verbunden sein.

Mit dem Backend-Prozessor IC 40 kann in der hier gezeigten Ausführungsform beispielsweise eine Bedienvorrichtung 9a verbunden sein, die in der Dockingstation 6 implementiert ist, ebenso jedoch auch eine externe Bedieneinheit 9b, die über eine hier nicht gezeigte Bedienschnittstellle 90 angekoppelt sein kann. Über eine in der Dockingstation 6 vorgesehene Bedienschnittstelle 490 können weitere Bedienelemente nach Bedarf angekoppelt werden.

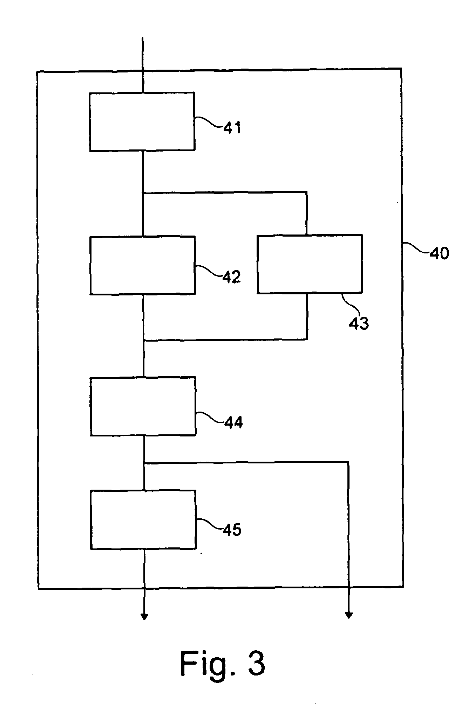

Figur 3 zeigt eine detailliertere schematische Darstellung eines Backend-Prozessor IC 40 gemäß einer beispielhaften Ausführungsform der Erfindung. In diesem Backend-Prozessor IC kann beispielsweise eine Demultiplexeinheit 41, eine Descrambling-Einheit 42 bzw. eine Entschlüsselungseinheit 43, eine MPEG-Decodierungseinheit 44 sowie optional eine Digital-/Analogwandlereinheit 45 vorgesehen sein. Die Digital-/Analogwandlereinheit 45 ist insbesondere für die Fälle vorgesehen, in denen das von der MPEG-Decodierungseinheit ausgegebene Signal an ein Gerät weitergegeben werden soll, dass analogfähig ist. Die Digital/Analogwandlereinheit kann jedoch auch umgangen werden, wenn das angeschlossene Multimediagerät 2 digitalfähig ist. Gemäß einer Ausführungsform wird beispielsweise das in die Datenverarbeitungseinheit 40 eingespeiste Signal durch eine Demultiplexeinheit 41 und eine Descrambling-Einheit 42 aufbereitet, um ein Signal für einen Kanal zu isolieren. Das kanalisolierte Signal kann dann durch eine Entschlüsselungseinheit 43 entschlüsselt und dann MPEG decodiert werden, sodass ein darstellbares Femsehsignal erhalten wird.

Es sollte angemerkt werden, dass die vorliegende Erfindung neben dem Empfang für digitale Fernsehsignale ebenfalls für den Empfang von digitalen Rundfunksignalen jeder Art angewendet werden kann, insbesondere für jegliche Aussendung von Video- und/oder Audiosignalen.

Es sei angemerkt, dass der Begriff "umfassend" weitere Elemente und Verfahrensschritte nicht ausschließt, ebenso wie der Begriff "ein" und "eine" mehrere Elemente und Schritte einschließt.

### Bezugszeichenliste

- 1: Vorrichtung zum Empfang digitaler Fernsehsignale
- 2: Multimediagerät
- 6: Dockingstation
- 7: Vorrichtung zum Empfangen digitaler Multimediasignale
- 8: Vorrichtung zum Decodieren digitaler Multimediasignale
- 9a, 9b: Bediengerät
- 10: Tuner IC
- 20a, 20b: HF-Signalanschlüsse
- 30: Demodulator IC
- 40: Backend Prozessor IC
- 41: Demultiplexeinheit
- 42: Descramblingeinheit
- 43: Entschlüsselungseinheit
- 44: MPEG Dekodierungseinheit
- 45: Digital/Analog Wandlereinheit
- 50: RAM Speicher
- 60: Flash Speicher
- 70: Smartcard IC
- 80: Smartcard-Slot
- 90: Schnittstelle Bedien- und Anzeigeelemente
- 100: Remodulator-Baugruppe
- 110: Remodulator-HF-Anschlüsse
- 120: RCA/Toslink Audio- und Video-Ausgänge bzw. HDMI-Schnittstelle
- 130a, 130b: Stromversorgungsschaltung
- 140a, 140b: Stromversorgungsanschluß
- 170a, 170b: Frontend-Modul bzw. -Baugruppe
- 180: Backend-Modul bzw. -Baugruppe
- 370: Backend-Schnittstelle externe Empfangsvorrichtung
- 371: Ankoppelbereich Datenübertragung Backend-Schnittstelle
- 372: Ankoppelbereich Spannungsversorgung Backend-Schnittstelle
- 380: Frontend-Schnittstelle externe Decodierungsvorrichtung
- 381a, 381b: Ankoppelbereich Datenübertragung Frontend-Schnittstelle
- 382: Ankoppelbereich Spannungsversorgung Frontend-Schnittstelle
- 383: Ankoppelbereich Bedienschnittstelle
- 384: Ankoppelbereich HDMI Schnittstelle
- 470: Frontendschnittstelle Dockingstation
- 471: Ankoppelbereich Datenübertragung Frontend-Schnittstelle
- 472: Ankoppelbereich Spannungsversorgung Frontend-Schnittstelle
- 480: Backend-Schnittstelle Dockingstation
- 481a, 481b: Ankoppelbereich Datenübertragung Backend-Schnittstelle
- 482: Ankoppelbereich Spannungsversorgung Backend-Schnittstelle
- 483: Ankoppelbereich Bedienschnittstelle
- 484: Ankoppelbereich HDMI-Schnittstelle
- 490: Bedienschnittstelle Dockingstation

## Patentansprüche

1. Dockingstation für ein lösbares Ankoppeln einer Vorrichtung zum Decodieren von digitalen Multimediasignalen, wobei die Dockingstation (6) aufweist:
eine Signaleingangsschnittstelle (20a) für digitale Multimediasignale;
eine erste Frontend-Baugruppe (170a), die ausgelegt ist zum Empfangen der digitalen Multimediasignale;
eine Backend-Schnittstelle (480) mit einem ersten Ankoppelbereich (481a) und einer HDMI Eingangsschnittstelle (484),
wobei der erste Ankoppelbereich (481a) ausgelegt ist zum lösbaren Ankoppeln einer externen Backend-Baugruppe (180) einer externen Vorrichtung zum Decodieren von digitalen Multimediasignalen (8),
wobei die HDMI Eingangsschnittstelle (484) ausgelegt ist zum lösbaren Ankoppeln einer HDMI Ausgangsschnittstelle der externen Vorrichtung zum Decodieren von digitalen Multimediasignalen (8),
wobei die erste Frontend-Baugruppe (170a) mit dem ersten Ankoppelbereich (481a) der Backendschnittstelle (480) verbunden ist,
ferner **gekennzeichnet durch**
eine HDMI Ausgangsschnittstelle (120), die ausgelegt ist zum lösbaren Ankoppeln eines externen Multimediagerätes (2) und
eine Frontend-Schnittstelle (470) mit einem Ankoppelbereich (471), der ausgelegt ist zum lösbaren Ankoppeln einer zweiten, externen Frontend-Baugruppe (170b),
wobei die Backend-Schnittstelle (480) einen zweiten Ankoppelbereich (481 b) aufweist, der ausgelegt ist zum lösbaren durchschleifenden Ankoppeln der Frontend-Schnittstelle (470) an die externe Backend-Baugruppe (180)
wobei die HDMI Ausgangsschnittstelle (120) ausgelegt ist, ein HDMI-Signal von der HDMI Eingangsschnittstelle (484) an das externe Multimediagerät (2) zu leiten.

2. Dockingstation nach Anspruch 1, ferner aufweisend eine Spannungsversorgungsvorrichtung (130a) für die Dockingstation (6); wobei die Backend-Schnittstelle (480) einen Ankoppelbereich (482) aufweist, der ausgelegt ist zum lösbaren Ankoppeln der Spannungsversorgungsvorrichtung (130a) an die ankoppelbare externe Backend-Baugruppe (180).

3. Dockingstation nach einem der Ansprüche 1 und 2, wobei die Frontend-Schnittstelle (470) einen Ankoppelbereich (472) aufweist, der ausgelegt ist zum lösbaren Ankoppeln einer externen Spannungsversorgung (130b) an die Dockingstation (6), wobei die Backend-Schnittstelle (480) einen Ankoppelbereich (482) aufweist, der ausgelegt ist zum lösbaren durchschleifenden Ankoppeln einer externen Spannungsversorgungsvorrichtung (130b) an die ankoppelbare externe Backend-Baugruppe (180).

4. Dockingstation nach einem der Ansprüche 1 bis 3, ferner mit einer Bedienvorrichtung (9a), wobei die Backend-Schnittstelle (480) einen Ankoppelbereich (483) aufweist, der ausgelegt ist zum lösbaren Ankoppeln der Bedienvorrichtung (9a) an die ankoppelbare externe Vorrichtung zum Decodieren digitaler Multimediasignale (8).

5. Dockingstation nach einem der Ansprüche 1 bis 4, ferner mit einer Bedienschnittstelle (490), die ausgelegt ist zum lösbaren Ankoppeln einer externen Bedienvorrichtung (9b) an die Dockingstation (6), wobei die Backend-Schnittstelle (480) einen Ankoppelbereich (483) aufweist, der ausgelegt ist zum lösbaren durchschleifenden Ankoppeln einer externen Bedienvorrichtung (9b) an die ankoppelbare externe Vorrichtung zum Decodieren digitaler Multimediasignale (8).

6. Dockingstation nach Anspruch 5, wobei die Bedienschnittstelle (490) eine Infrarotschnittstelle ist.

7. Dockingstation nach einem der Ansprüche 1 bis 6, wobei die Frontend-Baugruppe (170a) eine Empfangsvorrichtung (10) zum Empfangen digitaler Multimediasignale und eine Demodulationsvorrichtung (30) zum Demodulieren digitaler Multimediasignale aufweist.

8. Dockingstation nach einem der Ansprüche 1 bis 7, wobei die digitalen Multimediasignale digitale Fernsehsignale sind.

9. Set-Top Box zum Decodieren digitaler Multimediasignale, aufweisend:
eine Vorrichtung zum Decodieren digitaler Multimediasignale (8),
eine Dockingstation (6) nach einem der Ansprüche 1 bis 8,
wobei die Vorrichtung zum Decodieren digitaler Multimediasignale umfasst:
eine Backend-Baugruppe (180), die ausgelegt ist für die Datenverarbeitung digitaler Multimediasignale,
eine Frontend-Schnittstelle (380) mit einer Ausgangsschnittstelle (384) und einem ersten Ankoppelbereich (381a), der ausgelegt ist zum lösbaren Ankoppeln der Frontend-Baugruppe (170a) der Dockingstation (6),
wobei der erste Ankoppelbereich der Frontend-Schnittstelle (381a) der Vorrichtung zum Decodieren digitaler Multimediasignale (8) mit dem ersten Ankoppelbereich der Backend-Schnittstelle (481 a) der Dockingstation (6) koppelbar ist
wobei die HDMI Ausgangsschnittstelle (120) ausgelegt ist zum lösbaren Ankoppeln eines Multimediagerätes (2) über die lösbar ankoppelbare HDMI-Eingangsschnittstelle (484) der Dockingstation und die Ausgangsschnittstelle (384) der Frontendschnittstelle (380) der Vorrichtung zum Decodieren digitaler Multimediasignale (8).

10. Set-Top Box nach Anspruch 9, wobei die Frontend-Schnittstelle (380) einen Ankoppelbereich (382) aufweist zum lösbaren Ankoppeln einer externen Spannungsversorgung (130a, 130b) an die Vorrichtung zum Decodieren digitaler Multimediasignale (8) über die Backend-Schnittstelle (482) der Dockingstation.

11. Set-Top Box nach einem der Ansprüche 9 und 10, ferner aufweisend eine Bedienschnittstelle (90, 383), die ausgelegt ist, um einen Datenaustausch zwischen einem externen Bediengerät (9a, 9b) und der Vorrichtung zum Decodieren digitaler Multimediasignale (8) zu ermöglichen, wobei die Bedienschnittstelle (383) mit der Backend-Schnittstelle (483) der Dockingstation koppelbar ist.

12. Set-Top Box nach einem der Ansprüche 9 bis 11
wobei die Vorrichtung zum Decodieren digitaler Multimediasignale (8) und die Dockingstation (6) jeweils zueinander passende Steckverbindungen aufweisen und direkt miteinander gekoppelt sind.

13. Set-Top Box nach einem der Ansprüche 9 bis 12, wobei die Frontend-Schnittstelle (380) der Vorrichtung zum Decodieren digitaler Multimediasignale (8) einen zweiten Ankoppelbereich (381b) aufweist, der ausgelegt ist zum lösbaren Ankoppeln einer externen Frontend-Baugruppe (170b) über die lösbar ankoppelbare Backend-Schnittstelle (481 b) der Dockingstation.

14. Set-Top Box gemäß Anspruch 13, mit einer Vorrichtung zum Empfang von digitalen Multimediasignalen (7), wobei die Vorrichtung zum Empfangen von digitalen Multimediasignalen (7) aufweist:
eine Signaleingangsschnittstelle (20b) für digitale Multimediasignale;
eine Frontend-Baugruppe (170b), die ausgelegt ist zum Empfangen von digitalen Multimediasignalen,
eine Backend-Schnittstelle (370), die ausgelegt ist zum Ankoppeln an die Dockingstation (6);
wobei die Backend-Schnittstelle (370) der Vorrichtung zum Empfang von digitalen Multimediasignalen (7) lösbar an die Frontend-Schnittstelle (470) der Dockingstation ankoppelbar ist.

## Claims

1. A docking station for a releasable coupling of a device for decoding digital multimedia signals, wherein the docking station (6) comprises:
a signal input interface (20a) for digital multimedia signals;
a first front-end module (170a) which is designed for receiving the digital multimedia signals;
a back-end interface (480) having a first coupling area (481 a) and a HDMI input interface (484),
wherein the first coupling area (481a) is designed for the releasable coupling of an external back-end module (180) of an external device for decoding digital multimedia signals (8),
wherein the HDMI input interface (484) is designed for the releasable coupling of a HDMI output interface of the external device for decoding digital multimedia signals (8),
wherein the first front-end module (170a) is connected to the first coupling area (481a) of the back-end interface (480),
further **characterised by**
a HDMI output interface (120) which is designed for the releasable coupling of an external multimedia device (2) and
a front-end interface (470) having a coupling area (471) which is designed for the releasable coupling of a second external front-end module (170b),
wherein the back-end interface (480) comprises a second coupling area (481b) which is designed for the releasable throughlooping coupling of the front-end interface (470) to the external back-end module (180)
wherein the HDMI output interface (120) is designed to convey a HDMI signal from the HDMI input interface (484) to the external multimedia device (2).

2. The docking station according to Claim 1, further comprising a voltage supply device (130a) for the docking station (6); wherein the back-end interface (480) comprises a coupling area (482) which is designed for the releasable coupling of the voltage supply device (130a) to the coupleable external back-end module (180).

3. The docking station according to one of Claims 1 and 2, wherein the front-end interface (470) comprises a coupling area (472) which is designed for the releasable coupling of an external voltage supply (130b) to the docking station (6), wherein the back-end interface (480) has a coupling area (482) which is designed for the releasable throughlooping coupling of an external voltage supply device (130b) to the coupleable external back-end module (180).

4. The docking station according to one of Claims 1 to 3, further comprising a control device (9a), wherein the back-end interface (480) comprises a coupling area (483) which is designed for the releasable coupling of the control device (9a) to the coupleable external device for decoding digital multimedia signals (8).

5. The docking station according to one of Claims 1 to 4, further having a control interface (490) which is designed for the releasable coupling of an external control device (9b) to the docking station (6), wherein the back-end interface (480) comprises a coupling area (483) which is designed for the releasable throughlooping coupling of an external control device (9b) to the coupleable external device for decoding digital multimedia signals (8).

6. The docking station according to Claim 5, wherein the control interface (490) is an infra-red interface.

7. The docking station according to one of Claims 1 to 6, wherein the front-end module (170a) comprises a receiving device (10) for receiving digital multimedia signals and a demodulation device (30) for demodulating digital multimedia signals.

8. The docking station according to one of Claims 1 to 7, wherein the digital multimedia signals are digital television signals.

9. A set-top box for decoding digital multimedia signals, comprising:
a device for decoding digital multimedia signals (8),
a docking station (6) according to one of Claims 1 to 8,
wherein the device for decoding digital multimedia signals comprises:
a back-end module (180) which is designed for the data processing of digital multimedia signals,
a front-end interface (380) with an output interface (384) and a first coupling area (381a) which is designed for the releasable coupling of the front-end module (170a) of the docking station (6),
wherein the first coupling area of the front-end interface (381a) of the device for decoding digital multimedia signals (8) can be coupled with the first coupling area of the back-end interface (481a) of the docking station (6)
wherein the HDMI output interface (120) is designed for the releasable coupling of a multimedia device (2) via the releasably coupleable HDMI input interface (484) of the docking station and the output interface (384) of the front-end interface (380) of the device for decoding digital multimedia signals (8).

10. The set-top box according to Claim 9, wherein the front-end interface (380) comprises a coupling area (382) for the releasable coupling of an external voltage supply (130a, 130b) to the device for decoding digital multimedia signals (8) via the back-end interface (482) of the docking station.

11. The set-top box according to one of Claims 9 and 10, further comprising a control interface (90, 383) which is designed to enable a data exchange between an external control device (9a, 9b) and the device for decoding digital multimedia signals (8), wherein the control interface (383) can be coupled with the back-end interface (483) of the docking station.

12. The set-top box according to one of Claims 9 to 11
wherein the device for decoding digital multimedia signals (8) and the docking station (6) have plug connections which fit one another in each case and are directly coupled to one another.

13. The set-top box according to one of Claims 9 to 12, wherein the front-end interface (380) of the device for decoding digital multimedia signals (8) comprises a second coupling area (381b) which is designed for the releasable coupling of an external front-end module (170b) via the releasably coupleable back-end interface (481b) of the docking station.

14. The set-top box according to Claim 13, having a device for receiving digital multimedia signals (7), wherein the device for receiving digital multimedia signals (7) comprises:
a signal input interface (20b) for digital multimedia signals;
a front-end module (170b) which is designed for receiving digital multimedia signals,
a back-end interface (370) which is designed for coupling to the docking station (6);
wherein the back-end interface (370) of the device for receiving digital multimedia signals (7) can be coupled releasably to the front-end interface (470) of the docking station.

## Revendications

1. Station d'accueil pour un couplage réversible d'un dispositif de décodage de signaux multimédia numériques, dans laquelle la station d'accueil (6) présente :
une interface d'entrée de signaux (20a) pour des signaux multimédia numériques ;
un premier module frontal (170a), qui est conçu pour recevoir les signaux multimédia numériques ;
une interface dorsale (480) avec une première zone de couplage (481a) et une interface d'entrée HDMI (484),
dans laquelle la première zone de couplage (481a) est conçue afin de coupler de manière réversible un module dorsal externe (180) d'un dispositif externe de décodage de signaux multimédia numériques (8),
dans laquelle l'interface d'entrée HDMI (484) est conçue afin de coupler de manière réversible une interface de sortie HDMI du dispositif externe de décodage de signaux multimédia numériques (8),
dans laquelle le premier module frontal (170a) est relié à la première zone de couplage (481a) de l'interface dorsale (480),
**caractérisée en outre par**
une interface de sortie HDMI (120), qui est conçue afin de coupler de manière réversible un appareil multimédia externe (2) et
une interface frontale (470) avec une zone de couplage (471), qui est conçue afin de coupler de manière réversible un deuxième module frontal externe (170b),
dans laquelle l'interface dorsale (480) présente une deuxième zone de couplage (481b), qui est conçue afin de coupler par loop through de manière réversible l'interface frontale (470) au module dorsal externe (180),
dans laquelle l'interface de sortie HDMI (120) est conçue afin de guider un signal HDMI de l'interface d'entrée HDMI (484) vers l'appareil multimédia externe (2).

2. Station d'accueil selon la revendication 1, présentant en outre un dispositif d'alimentation en tension (130a) pour la station d'accueil (6), dans laquelle l'interface dorsale (480) présente une zone de couplage (482), qui est conçue afin de coupler de manière réversible le dispositif d'alimentation en tension (130a) au module dorsal externe (180) pouvant être couplé.

3. Station d'accueil selon une des revendications 1 et 2, dans laquelle l'interface frontale (470) présente une zone de couplage (472), qui est conçue afin de coupler de manière réversible une alimentation en tension externe (130b) à la station d'accueil (6), dans laquelle l'interface dorsale (480) présente une zone de couplage (482), qui est conçue afin de coupler par loop through de manière réversible un dispositif d'alimentation en tension externe (130b) au module dorsal externe pouvant être couplé (180).

4. Station d'accueil selon une des revendications 1 à 3, comportant en outre un dispositif de commande (9a), dans laquelle l'interface dorsale (480) présente une zone de couplage (483), qui est conçue afin de coupler de manière réversible le dispositif de commande (9a) au dispositif externe pouvant être couplé de décodage de signaux multimédia numériques (8).

5. Station d'accueil selon une des revendications 1 à 4, comportant en outre une interface de commande (490), qui est conçue afin de coupler de manière réversible un dispositif de commande externe (9b) à la station d'accueil (6), dans laquelle l'interface dorsale (480) présente une zone de couplage (483), qui est conçue afin de coupler par loop through de manière réversible un dispositif de commande externe (9b) au dispositif externe pouvant être couplé de décodage de signaux multimédia externes (8).

6. Station d'accueil selon la revendication 5, dans laquelle l'interface de commande (490) est une interface infra-rouges.

7. Station d'accueil selon une des revendications 1 à 6, dans laquelle le module frontal (170a) présente un dispositif de réception (10) pour recevoir des signaux multimédia numériques et un dispositif de démodulation (30) pour démoduler des signaux multimédia numériques.

8. Station d'accueil selon une des revendications 1 à 7, dans laquelle les signaux multimédia numériques sont des signaux télévisuels numériques.

9. Décodeur numérique pour décoder des signaux multimédia numériques, présentant :
un dispositif de décodage de signaux multimédia numériques (8),
une station d'accueil (6) selon une des revendications 1 à 8,
dans lequel le dispositif de décodage de signaux multimédia numériques comprend :
un module dorsal (180), qui est conçue pour le traitement de données de signaux multimédia numériques,
une interface frontale (380) comportant une interface de sortie (384) et une première zone de couplage (381a), qui est conçue afin de coupler de manière réversible le module frontal (170a) de la station d'accueil (6),
dans lequel la première zone de couplage de l'interface frontale (381a) du dispositif de décodage de signaux multimédia numériques (8) peut être couplée à la première zone de couplage de l'interface dorsale (481a) de la station d'accueil (6),
dans lequel l'interface de sortie HDMI (120) est conçue afin de coupler de manière réversible un appareil multimédia (2) par l'intermédiaire de l'interface d'entrée HDMI (484) pouvant être couplée de manière réversible de la station d'accueil et l'interface de sortie (384) de l'interface frontale (380) du dispositif de décodage de signaux multimédia numériques (8).

10. Décodeur numérique selon la revendication 9, dans lequel l'interface frontale (380) présente une zone de couplage (382) pour coupler de manière réversible une alimentation en tension externe (130a, 130b) au dispositif de décodage de signaux multimédia numériques (8) par l'intermédiaire de l'interface dorsale (482) de la station d'accueil.

11. Décodeur numérique selon une des revendications 9 et 10, présentant en outre une interface de commande (90,383), qui est conçue afin de permettre un échange de données entre un appareil de commande externe (9a,9b) et le dispositif de décodage de signaux multimédia numériques (8), dans lequel l'interface de commande (383) peut être couplée avec l'interface dorsale (483) de la station d'accueil.

12. Décodeur numérique selon une des revendications 9 à 11,
dans lequel le dispositif de décodage de signaux multimédia numériques (8) et la station d'accueil (6) présentent des liaison enfichables mutuellement adaptées les unes aux autres et sont couplés directement l'un à l'autre.

13. Décodeur numérique selon une des revendications 9 à 12,
dans lequel l'interface frontale (380) du dispositif de décodage de signaux multimédia numérique (8) présente une deuxième zone de couplage (381b), qui est conçue afin de coupler de manière réversible un module frontal externe (170b) par l'intermédiaire de l'interface dorsale pouvant être couplée de manière réversible (481b) de la station d'accueil.

14. Décodeur numérique selon la revendication 13, comportant un dispositif de réception de signaux multimédia numériques (7), dans lequel le dispositif de réception de signaux multimédia numériques (7) présente :
une interface d'entrée de signaux (20b) pour signaux multimédia numériques ;
un module frontal (170b), qui est conçu afin de recevoir des signaux multimédia numériques ;
une interface dorsale (370), qui est conçue afin de coupler à la station d'accueil (6) ;
dans lequel l'interface dorsale (370) du dispositif de réception de signaux multimédia numériques (7) peut être couplée de manière réversible à l'interface frontale (470) de la station d'accueil.
